# EUROPEAN PATENT SPECIFICATION

(11) **EP 0 644 475 B1**
(45) Date of publication and mention of the grant of the patent: **21.07.2004**
(21) Application number: 94306661.3
(22) Date of filing: 12.09.1994
(51) Int. Cl.: G06F 1/32, G06F 13/42

(54) **Apparatus and method for controlling a peripheral bus clock signal**
Vorrichtung und Verfahren zur Steuerung eines Peripheriebustaktsignals
Appareil et méthode pour commander un signal d'horloge de bus périphérique

(30) Priority: 22.09.1993 US 125406; 01.10.1993 US 131092; 28.04.1994 US 234819
(43) Date of publication of application: 22.03.1995
(73) Proprietor: ADVANCED MICRO DEVICES INC., Sunnyvale, California 94088-3453 (US)
(72) Inventor: Gephardt, Douglas D., Austin, Texas 78748 (US); Horton, Kelly M., Austin, Texas 78749 (US); Macdonald, James R., Buda, Texas 78610 (US); O'Brien, Rita, Austin, Texas 78749 (US)
(74) Representative: Brookes Batchellor

(56) References cited:
- US-A- 4 381 552
- US-A- 4 841 440
- US-A- 5 167 024
- COMPUTER DESIGN, vol.31, no.8, August 1992, LITTLETON, MASSACHUSETTS US pages 36 - 40 WARREN ANDREWS 'PCI promises solution to local-bus bottleneck'
- PATENT ABSTRACTS OF JAPAN vol. 11, no. 383 (P-646) 15 December 1987 & JP-A-62 150 453 (NEC) 4 July 1987
- PATENT ABSTRACTS OF JAPAN vol. 18, no. 287 (P-1746) 31 May 1994 & JP-A-06 051 863 (NEC CORP.) 25 February 1994

## Description

This invention relates to power reduction within computer systems and more particularly to a system and method for controlling a peripheral bus clock signal.

An on-going developmental goal of manufacturers has been to reduce the power consumption of computer systems. Reducing power consumption typically reduces heat generation of the system, thereby increasing reliability and decreasing cost. In addition, power reduction has been particularly important in maximizing the operating life of battery-powered portable computer systems.

Various techniques have been devised for reducing the power consumption of computer systems. These techniques include increasing the integration of circuitry and incorporation of improved circuitry and power management units (PMU's). One specific power reduction technique involves the capability of stopping clock signals that drive inactive circuit portions. A system employing such a technique typically includes a power management unit that detects or predicts inactive circuit portions and accordingly stops the clock signals associated with the inactive circuit portions. By turning off "unused" clock signals that drive inactive circuit portions, overall power consumption of the system is decreased. A similar technique involves the capability of reducing the frequency of clock signals that drive circuit portions during operating modes which are not time critical.

Although the capability of stopping "unused" clock signals has been generally successful in reducing power consumption, the technique has generally not been applied to clock signals that drive peripheral buses having alternate bus masters connected thereto. The reason for this limitation is best understood from the following example.

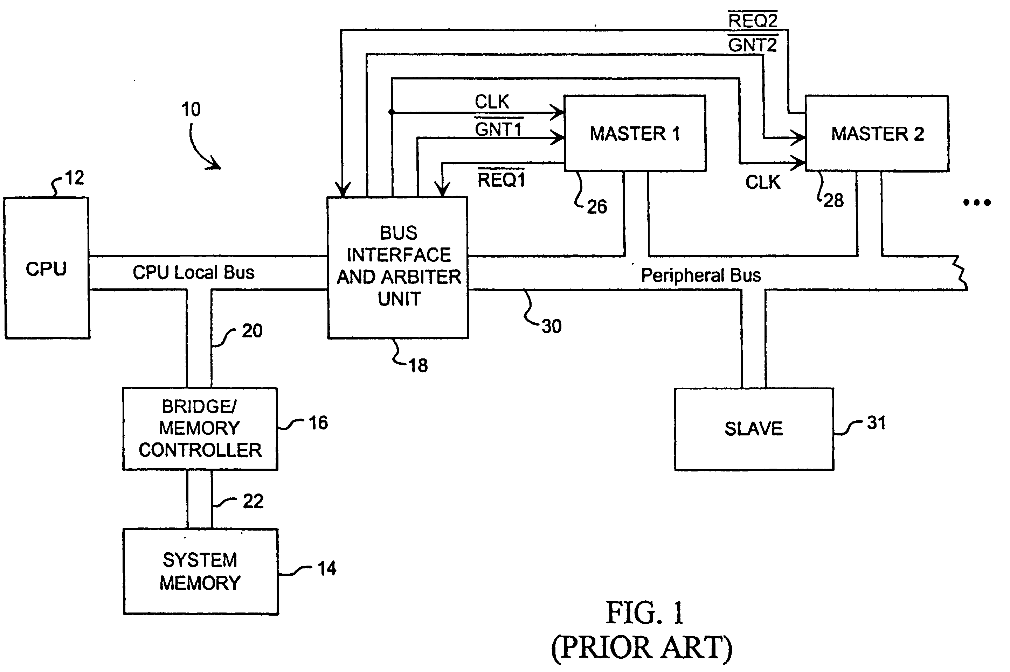

Figure 1 is a block diagram that illustrates a computer system 10 including a microprocessor (CPU) 12, a system memory 14, a bridge/memory controller 16, and a bus interface and arbiter unit 18. A CPU local bus 20 couples the microprocessor 12 to bridge/memory controller 16 and bus interface and arbiter unit 18. A system memory bus 22 couples system memory 14 to bridge/memory controller 16. An alternate bus master 26 labeled "Master1" and a second alternate bus master 28 labeled "Master2" are coupled to the bus interface and arbiter unit 18 through a peripheral bus 30. A slave device 31 is similarly coupled to bus interface and arbiter unit 18 through peripheral bus 30.

When alternate bus master 26 requires mastership of peripheral bus 30, a request signal labeled REQ1 is asserted by the alternate bus master 26 and is detected by bus interface and arbiter unit 18. If mastership of the bus is granted in accordance with the internal arbitration logic, the bus interface and arbiter unit 18 asserts a grant signal labeled GNT1 and, accordingly, alternate bus master 26 attains mastership of peripheral bus 30 and may execute the desired cycle.

In the system of Figure 1, the request signal REQx (i.e., REQ1 or REQ2) must be asserted by the associated alternate bus master synchronous to the peripheral bus clock signal CLK. This requirement is specified by several prevalently utilized peripheral bus standards, such as the PCI bus standard. As a result of the requirement, systems employing such peripheral bus standards are designed such that the peripheral bus clock signal CLK is always turned on, thereby allowing an alternate bus master to generate a synchronous request signal. In such systems, however, power is wasted when the peripheral bus is idle.

An additional hindrance to the employment of clock-stopping (or clock-slowing) power reduction techniques for peripheral buses arises since slave devices may require a clock signal beyond the end of a peripheral bus cycle. For example, additional clock cycles may be required at the completion of a peripheral bus cycle for slave device 31 to empty an internal FIFO. If the clock signal were stopped during such a situation, the performance of the system as well as the integrity of data may be adversely affected.

Still another problem associated with stopping or slowing a peripheral bus clock signal for power management purposes is that if the peripheral device is incapable of restarting the peripheral bus clock signal or does not receive a clock edge within a given time, the external bus master may be stalled or may lose data. As a result, the performance of the system may be degraded or the integrity of data may be adversely affected. Since data integrity is crucial within any computer system and since conventional peripheral bus masters are typically incapable of controlling an associated peripheral bus clock signal, such conventional bus master devices may not be compatible with a computer system wherein a peripheral clock signal is stopped or slowed for power management. Consequently, the backwards compatibility of such a computer system with conventional peripheral devices may be limited.

The problems outlined above are in large part solved by a system and method for controlling a peripheral bus clock signal according to the present invention.

The present invention provides a computer system comprising:
a microprocessor;
a local bus coupled to said microprocessor;
a peripheral bus;
a bus interface and arbiter unit coupled to said local bus and to said peripheral bus for orchestrating the transfer of data and address signals between said local bus and said peripheral bus and for arbitrating mastership of said peripheral bus;
characterized in that the system further comprises:
a clock generator circuit for providing a peripheral bus clock signal on said peripheral bus, wherein said peripheral bus clock signal is capable of being selectively stopped and re-started;
an alternate bus master coupled to said peripheral bus wherein said alternate bus master is capable of asserting a clock request signal when said peripheral bus clock signal is stopped; and
a clock control circuit coupled to said alternate bus master for re-starting said peripheral bus clock signal in response to the assertion of said clock request signal.

The present invention also provides a method for re-starting a peripheral bus clock signal and requesting mastership of a peripheral bus comprising the steps of:
stopping said peripheral bus clock signal upon the occurrence of a predetermined condition;
generating an asynchronous clock request signal within an alternate bus master;
re-starting said peripheral bus clock signal in response to said asynchronous clock request signal; and
generating a synchronous bus request signal within said alternate bus master after said peripheral bus clock signal has been re-started, wherein said synchronous bus request signal is synchronous to said peripheral bus clock signal.

As will be described hereafter, according to a preferred embodiment of the invention, the system accommodates a power conservation technique wherein a peripheral bus clock signal may be stopped (or slowed) in response to, for example, a power management unit. Prior to stopping the peripheral bus clock signal, an indicator signal is generated at a clock request line by a clock control circuit. If a slave device continues to require the peripheral bus clock signal, the slave device responsively generates a clock request signal. The clock control circuit receives the clock request signal and accordingly prevents the peripheral bus clock signal from stopping. If an alternate bus master requires mastership of the peripheral bus when the peripheral bus clock signal is stopped, the alternate bus master may be configured to assert a clock request signal for re-starting the peripheral bus clock. The clock request signal is broadcasted on the peripheral bus and is accordingly received by a clock control circuit. The clock control circuit responsively causes the re-starting of the peripheral bus clock signal. Subsequently, the alternate bus master can generate a bus request signal that is synchronous to the peripheral bus clock signal to thereby obtain a grant signal from a bus arbiter unit.

The system may further be configured to achieve backwards compatibility with conventional alternate bus masters that are incapable of internally generating a bus request signal. For such an embodiment, upon system reset, the BIOS boot code reads a configuration register within each alternate bus master. For PCI based systems, this configuration register may be the so-called MAXLAT register (or field). The contents of the configuration register are indicative of how often the particular master may require access to the peripheral bus. Upon reading the MAXLAT field of each master, the system sets a clock control timer in accordance with the MAXLAT value corresponding to the master which requires the most frequent access to the peripheral bus. If the master requiring the peripheral bus most frequently specifies a maximum latency time of, for example, 2 microseconds, the system sets the clock control timer to cycle (or trigger) every one microsecond (i.e., one-half of the specified maximum latency time). Thereafter, if a decision is made by the power management unit to stop the peripheral bus clock, the clock control timer begins cycling. Upon lapse of each microsecond, the clock control timer causes the clock generator to provide at least one clock edge (i.e., a one-shot or a multi-shot). This ensures that any bus master coupled to the peripheral bus can generate a synchronous bus request signal to obtain mastership of the peripheral bus even though that master is incapable of generating a clock request signal. The system further accomodates optimization of power management by stopping the clock signal for as long as possible between providing each periodic clock edge. If the power management unit alternatively causes the peripheral bus clock signal to be slowed during a power conserving mode, the values read from the MAXLAT fields of each master may be used to determine the minimum frequency at which the clock signal may be slowed. That is, the clock generator would be set to generate the peripheral bus clock signal at a period of not larger than half the maximum latency value specified within the MAXLAT field of the master requiring the peripheral bus most frequently. As a result of a system according to the present invention, the peripheral bus clock signal can be stopped or slowed for power management while still accommodating alternate bus masters that must assert a synchronous bus request signal to obtain mastership of the peripheral bus.

### BRIEF DESCRIPTION OF THE DRAWINGS

Other objects and advantages of the invention will become apparent upon reading the following detailed description and upon reference to the accompanying drawings in which:
Figure 1 is a block diagram that illustrates a computer system including a peripheral bus and a plurality of alternate bus masters coupled thereto.
Figure 2 is a block diagram that illustrates a portion of a computer system including a clock control circuit for re-starting a peripheral bus clock signal.
Figure 2A is a block diagram that illustrates a portion of a computer system including a flip-flop for enabling a pair of signal drivers.
Figure 3 is a diagram of an algorithmic state machine embodied within the clock control circuit of Figure 2.
Figure 4 is a block diagram of a portion of a computer system including alternate bus masters having internal state machines for requesting the peripheral bus clock signal and generating synchronous bus request signals.
Figure 5 is a diagram of an algorithmic state machine embodied within an alternate bus master.
Figure 6 is a block diagram that illustrates a computer system including a slave device capable of asserting a clock request signal.
Figure 7 is a diagram of an algorithmic state machine embodied within the slave device.
Figure 8 is a diagram of an algorithmic state machine embodied within the clock control circuit.
Figure 9 is a block diagram that illustrates a computer system including a conventional master device.
Figure 10 is a flow diagram that illustrates the operation of a programmable clock control circuit within the computersystem of Figure 9.
Figure 11 is a block diagram that illustrates a computer system including a conventional master device.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

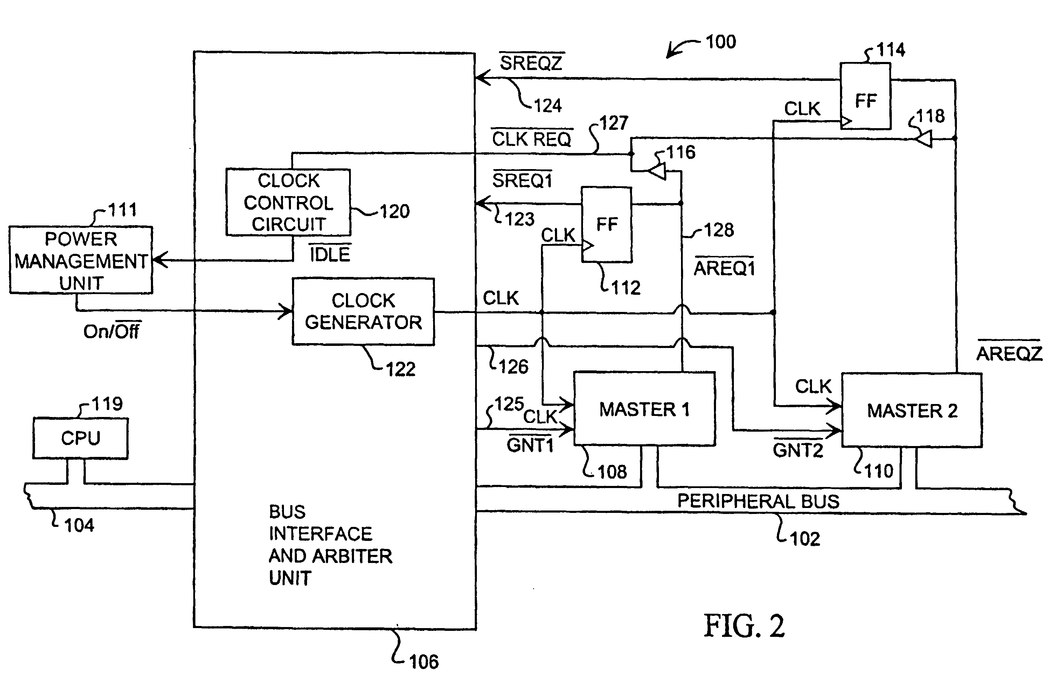

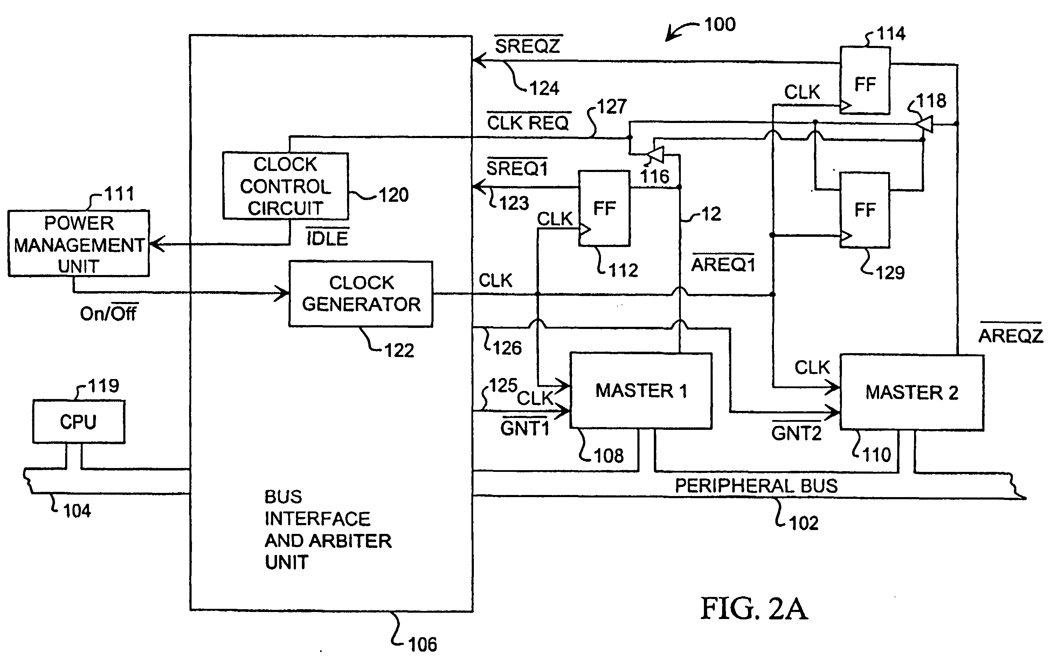

Referring now to Figure 2, a block diagram is shown of a portion of a computer system 100 in which a peripheral bus 102 is coupled to a CPU local bus 104 through a bus interface and arbiter unit 106. An alternate bus master 108 labeled "Master1" and a second alternate bus master 110 labeled "Master2" are coupled to peripheral bus 102, and a microprocessor (CPU) 119 is coupled to CPU local bus 104. A power management unit 111, flip-flops 112 and 114, and signal drivers 116 and 118 are further coupled to bus interface and arbiter unit 106.

The alternate bus masters 108 and 110 could be embodied by a variety of specific peripheral bus devices. For example, alternate bus master 108 could be embodied by a local area network (LAN) device that connects other computer systems to peripheral bus 102. Similarly, alternate bus master 110 could be embodied by an expansion bus interface that connects peripheral bus 102 to other peripheral buses.

Peripheral bus 102 has a predetermined bit width and may be connected to a variety of other peripheral devices such as CD-ROM devices. In one embodiment, peripheral bus 102 is implemented using the PCI standard bus configuration, although other peripheral bus standard configurations could be alternatively employed. The PCI standard bus configuration is described in the publication PCI Local Bus Specification, Revision 2, April 30, 1993, PCI Special Interest Group. This document is incorporated herein by reference in its entirety.

Microprocessor 119 is a data processing unit that implements a predetermined instruction set. Exemplary processing units include the model 80386 and model 80486 microprocessors. It is noted that the CPU local bus 104 may couple microprocessor 119 to a variety of other components, such as a cache memory and a memory controller.

The bus interface and arbiter unit 106 includes conventional circuitry that controls well known interfacing functions such as orchestrating and transferring control, data, and address signals between microprocessor 119 and devices coupled to peripheral bus 102. The bus interface and arbiter unit 106 further arbitrates and prioritizes devices that contend for the mastership of peripheral bus 102. Similar to the example described previously in conjunction with Figure 1, arbitration logic within the bus interface and arbiter unit 106 is configured to detect a synchronous request signal asserted by an alternate bus master and to generate an associated grant signal when mastership of the peripheral bus 102 can be attained. The bus interface and arbiter unit 106 receives synchronous request signals SREQ1 and SREQ2 at lines 123 and 124, respectively, and generates grant signals GNT1 and GNT2 at lines 125 and 126, respectively. It will be appreciated by those skilled in the art that these portions of the bus interface and arbiter unit 106 could be implemented using a variety of specific circuit configurations, and that exemplary circuit configurations are described in a host of publications of the known prior art.

The bus interface and arbiter unit 106 additionally includes a clock control circuit 120 and a clock generator 122. The clock generator 122 generates a peripheral bus clock signal labeled "CLK" for driving peripheral devices such as alternate bus master 108 and alternate bus master 110. As will be explained in greater detail below, the clock control circuit 120 controls the re-starting of clock generator 122 to accommodate alternate bus masters after power management unit 111 has stopped the peripheral bus clock signal CLK.

The operation of computer system 100 will be described next. For this discussion, it is assumed initially that power management unit 111 has caused clock generator 122 to turn off and thus that the peripheral bus clock signal CLK is stopped. Power management unit 111 may be configured to turn off clock generator 122 following, for example, the completion of a peripheral bus cycle executed by microprocessor 119 when no bus request signals are currently pending within bus interface and arbiter unit 106.

If one of the alternate bus masters 108 or 110 requires mastership of peripheral bus 102, a corresponding asynchronous bus request signal is asserted by that device. For example, if alternate bus master 108 requires mastership of peripheral bus 102, asynchronous request signal AREQ1 is asserted low at line 128. As with the example of Figure 1, the request signal received by bus interface and arbiter unit 106 at line 123 must be synchronous to the peripheral bus clock signal CLK. However, at this point, the clock generator 122 is turned off. Therefore, to provide a synchronous request signal, the asynchronous request signal AREQ1 is buffered through signal driver 116 which causes an asynchronous clock request signal CLKREQ at line 127 to be asserted low. When clock control circuit 120 detects the low assertion of the clock request signal CLKREQ, a signal IDLE is deasserted high by clock control circuit 120 which causes the power management unit 111 to turn on clock generator 122 and thus re-start the peripheral bus clock signal CLK (i.e., by driving signal ON/OFF high).

Upon the rising edge of the first peripheral clock signal CLK, the logical low signal at the line 128 (i.e., signal AREQ1) is latched into flip-flop 112 and is driven at the output of flip-flop 112. Accordingly, a synchronous request signal SREQ1 dictated by the output state of flip-flop 112 goes low. It is noted that the low transition of signal SREQ1 occurs synchronously with the clock signal CLK.

When the bus interface and arbiter unit 106 detects the low assertion of the synchronous request signal SREQ1, the bus interface and arbiter unit 106 generates the grant signal GNT1 according to its internal arbitration logic and consequently grants mastership of the peripheral bus 102 to the alternate bus master 108.

In the preferred embodiment, the alternate bus master 108 asserts the asynchronous request signal AREQ1 for a total of two clock cycles when mastership of peripheral bus 102 is desired. When the clock control circuit 120 detects the resulting low signal at line 127, the clock control circuit 120 takes over the drive and maintains a logical low signal at line 127, even though the asynchronous request signal AREQ1 has been deasserted by alternate bus master 108 following the two clock cycles. After the IDLE signal is deasserted high and clock generator 122 has been turned on by power management unit 111, the peripheral bus clock signal CLK cannot be stopped until the system microprocessor 119 regains mastership of peripheral bus 102, at which point the power management unit 111 may determine that the clock generator 122 can be stopped. For example, as stated previously, power management unit 111 may be configured to stop the peripheral bus clock signal CLK upon the completion of a peripheral bus cycle executed by microprocessor 119 if no bus request signals are currently pending within bus interface and arbiter unit 106. When the power management unit 111 determines that the peripheral bus clock signal CLK can be stopped according to such a predetermined condition, the clock control circuit 120 drives the clock request signal CLKREQ high for one clock cycle. Following this, the clock control circuit 120 releases the drive of the clock request signal CLKREQ and tri-states line 126. The power management unit 111 then turns off clock generator 122 by driving signal ON/OFF low, thereby causing the peripheral bus clock signal CLK to stop.

It is noted that in the preferred embodiment, signal drivers 116 and 118 are enabled only if line 127 was sampled high during the rising edge of the last peripheral bus clock signal CLK. This prevents possible signal contention at line 127 if an asynchronous request signal AREQx (i.e., AREQ1 or AREQ2) is asserted low at the same time the clock control circuit 120 drives line 127 high. An implementation of this feature is illustrated in Figure 2A in which a flip-flop 129 is used to sample line 127 during each cycle of the peripheral clock signal CLK, and to enable signal drivers 116 and 118 only if line 127 was sampled high.

Referring back to Figure 2, if the asynchronous request signals AREQ1 and AREQ2 are asserted simultaneously or concurrently, indicating that both alternate bus masters 108 and 110 desire mastership of peripheral bus 102, the clock request signal CLKREQ will again be driven low, thereby causing the peripheral bus clock signal CLK to restart. The synchronous request signals SREQ1 and SREQ2 are accordingly provided at the outputs of flip-flops 112 and 114, respectively, and are received at bus interface and arbiter unit 106. One of the grant signals GNT1 or GNT2 will thereafter be asserted in accordance with the predetermined priority established by the internal arbitration logic, and the other grant signal will be delayed until the "higher-priority" alternate bus master has completed its corresponding bus cycle. Thereafter, the bus interface and arbiter 106 unit asserts the other grant signal to allow the "lower priority" alternate bus master to execute its corresponding bus cycle.

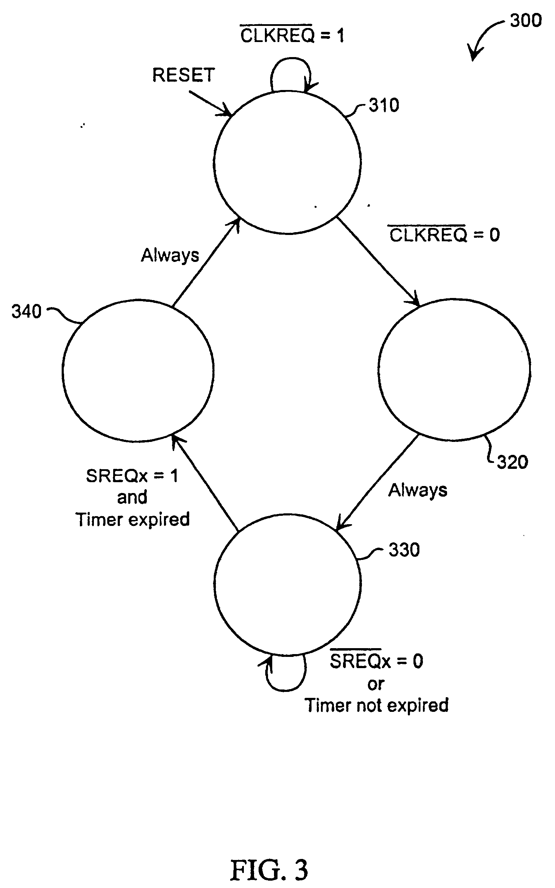

The internal logic of the clock control circuit 120 is next considered. Figure 3 is a diagram of an algorithmic state machine 300 embodied within the clock control circuit 120. State machine 300 includes four states 310, 320, 330 and 340. When the peripheral bus clock signal CLK is stopped, state machine 300 is in an idle state 310. State machine 300 remains in state 310 for as long as the clock request signal CLKREQ is high.

When the clock request signal CLKREQ goes low, state machine 300 enters a state 320. This transition occurs when one of the asynchronous request signals AREQx has been asserted by one of the alternate bus masters. During state 320, the clock control circuit 120 drives line 127 low and deasserts signal IDLE high. Power management unit 111 detects the deassertion of signal IDLE and consequently turns on clock generator 122 to re-start the peripheral bus clock signal CLK.

State machine 300 next enters state 330 during which the signal IDLE continues to be deasserted high. State machine 300 remains in state 330 for the entire time that a synchronous request signal SREQx is low. If all synchronous request signals are high, state machine 300 remains in state 330 for a predetermined time in accordance with a delay time established by an internal timer. This delay time is provided to ensure that ample time is provided after re-starting the clock signal CLK for the corresponding synchronous request signal SREQx to be driven low (i.e., by flip-flop 112 or 114). In one embodiment, the internal timer of state 330 is defined to ensure that at least four clock cycles have transpired before state machine 300 can exit from state 330.

When the synchronous request signals SREQx are high and the timer has expired, state machine 300 enters state 340. During state 340, the clock request signal CLKREQ is driven high by the clock control circuit 120 for one clock cycle. The IDLE signal is further asserted low.

The state machine 300 next reverts back to idle state 310 and clock control circuit 120 tri-states the clock request line 127. The power management unit 111 may subsequently turn off clock generator 122 after the system microprocessor 119 has regained mastership of peripheral bus 102, or according to any other desired power management scheme. Thereafter, the peripheral bus clock signal CLK may again be re-started by another alternate bus master in the manner described above by asserting the clock request signal low.

Referring back to Figure 2, it is noted that flip-flops 112 and 114 as well as signal drivers 116 and 118 may be incorporated as integral parts of the alternate bus masters 108 and 110. It is further noted that although signal lines 123-127 are shown separately from peripheral bus 102 for simplicity, signal lines 123-127 may be predefined control lines of the peripheral bus 102.

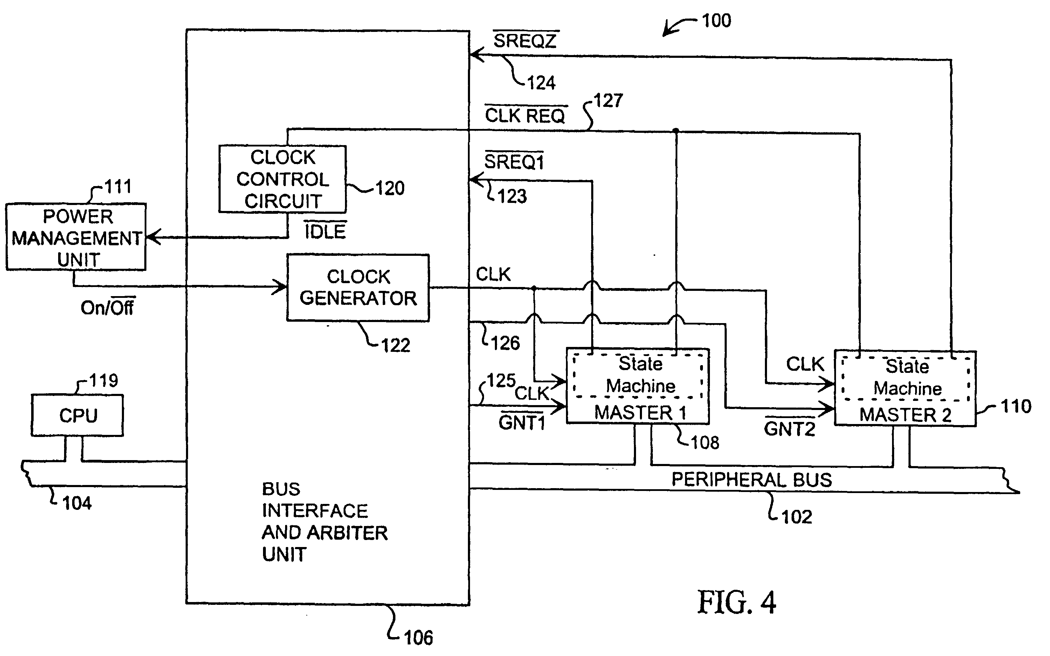

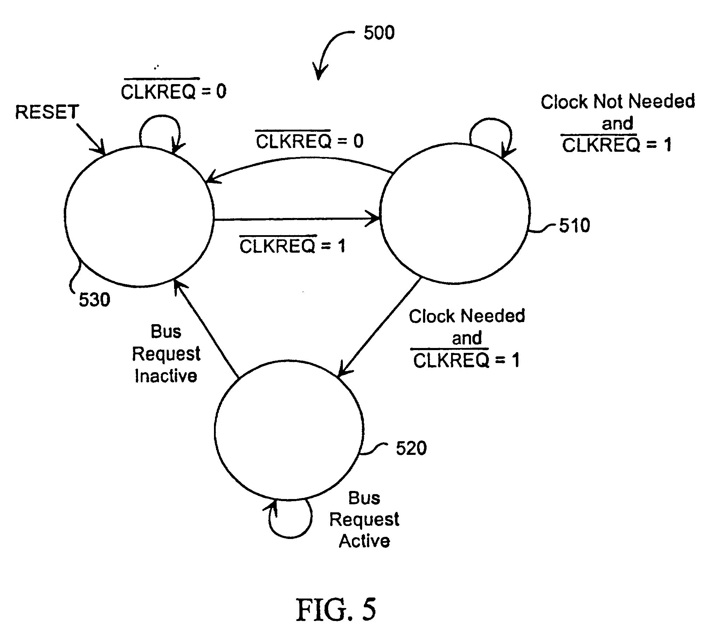

In another embodiment as illustrated in Figure 4, a state machine is incorporated within each alternate bus master to generate the clock request signal CLKREQ and the synchronous request signal SREQx. Circuit portions that correspond to those of Figure 2 are numbered identically. Figure 5 is a diagram of an algorithmic state machine 500 incorporated within each alternate bus master of such an embodiment. State machine 500 includes states 510, 520 and 530.

Referring to Figure 5 with reference to Figures 3 and 4, following reset, when the clock request signal goes high, state machine 500 transitions to state 510. At this point the power management unit 111 may signal the clock generator 122 to stop the clock. If the master peripheral has no need for the clock, state machine 500 remains in state 510. If system events cause the clock request signal to go low, state machine 500 reverts to state 530. If while in state 510, the master needs the clock, the state machine 500 transitions to state 520, causing the clock request signal CLKREQ to be driven low. The clock control circuit 120 then signals the clock generator 122 to restart the clock if it was stopped. The master may now assert its synchronous bus request signal SREQx to acquire the bus and perform its transaction. As long as the master maintains its bus request, the state machine remains in state 520. When the master deasserts its bus request, the state machine transitions to state 530 causing the clock request signal CLKREQ to tri-state.

As a result of the systems of Figures 2 and 4, a peripheral bus clock signal may be stopped for power management while still accommodating alternate bus masters that must assert a synchronous bus signal to obtain mastership of the peripheral bus. Power consumption of the computer systems may thereby be reduced while maintaining broad compatibility.

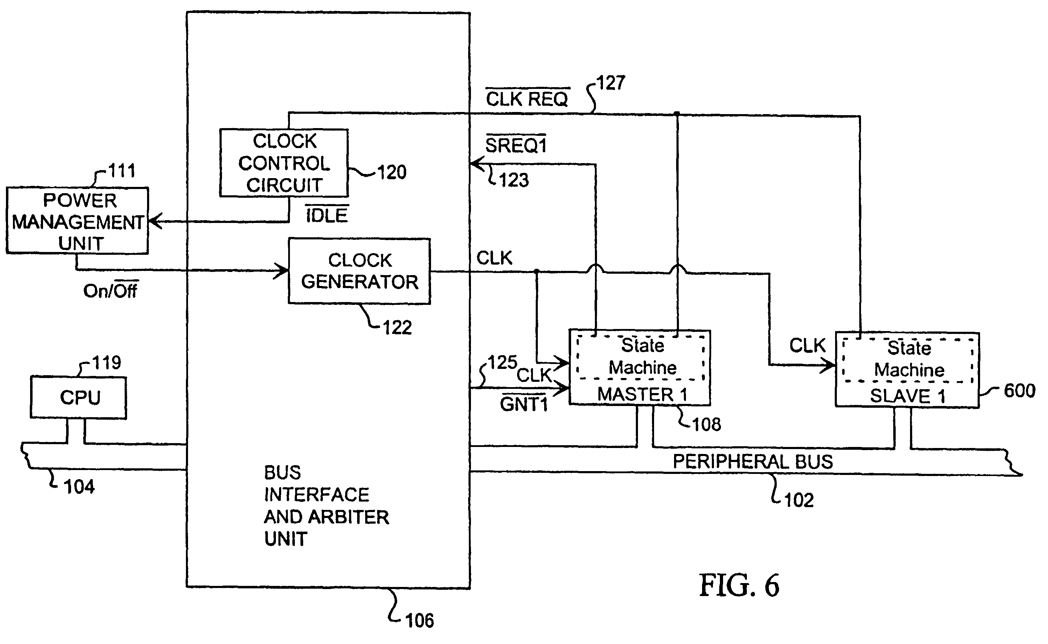

Turning next to Figure 6, a portion of a similar computer system is shown in which a slave device 600 is coupled to peripheral bus 102. Circuit blocks that correspond to those of Figure 4 are numbered identically.

Slave device 600 is coupled to receive the peripheral clock signal CLK and is coupled to line 127. As will be explained in greater detail below, the embodiment of Figure 6 allows slave device 600 to prevent the peripheral bus clock signal from being stopped if the peripheral bus clock signal is required by the slave following a peripheral bus cycle. For example, slave device 600 may require the peripheral bus clock signal after the completion of a peripheral bus transfer cycle to empty an internal FIFO buffer.

During operation of the embodiment of Figure 6, slave device 600 monitors the clock request signal CLKREQ at line 127. If slave device 600 detects a high assertion of the clock request signal CLKREQ and if the peripheral bus clock signal CLK is still required by the slave device, slave device 600 drives line 127 back low on the next clock cycle to prevent the peripheral bus clock signal CLK from being stopped.

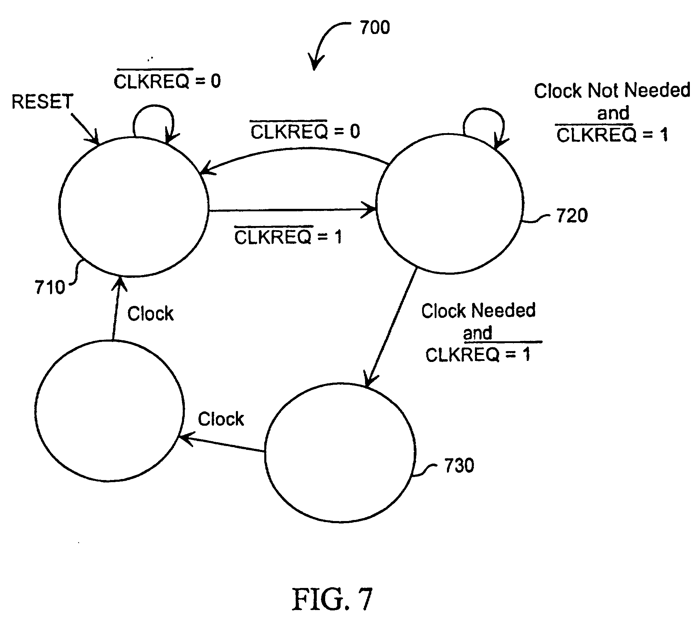

Figure 7 is a diagram of an algorithmic state machine 700 embodied within slave device 600. Upon reset of the system, state machine 700 enters state 710 during which line 127 is tri-stated by slave 600. State machine 700 remains in state 710 for as long as the clock request signal CLKREQ at line 127 is low.

When the clock request signal CLKREQ at line 127 goes high, state machine 700 enters state 720. During state 720, line 127 continues to be tri-stated by slave device 600. State machine 700 remains in state 720 for as long as the clock request signal CLKREQ remains high and while there is no need for the peripheral bus clock signal CLK.

If the clock request signal CLKREQ at line 127 falls back low, state machine 700 returns to state 710. If, on the other hand, the peripheral bus clock signal CLK is needed by slave 600 and the clock request signal at line 127 is high, state machine 700 enters state 730. During state 730, the clock request signal at line 127 is pulled low by slave device 600 for two clock cycles. State machine 700 then re-enters state 710 and line 127 is tri-stated by slave device 600.

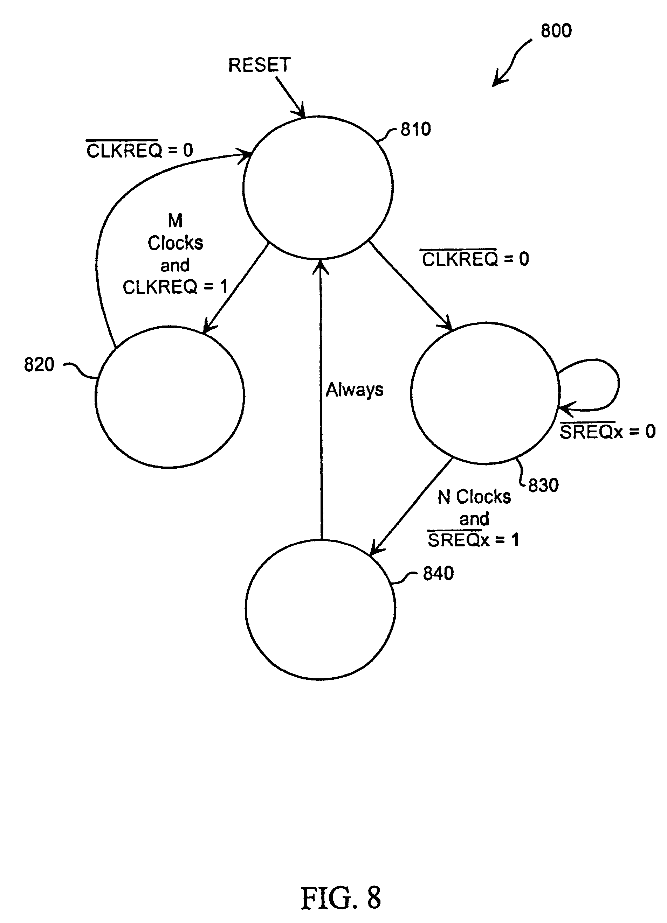

Figure 8 is a diagram of an alternative embodiment of a state machine 800 embodied within the clock control circuit 120 of Figures 2, 4 and 6. State machine 800 is responsive to clock request signals (i.e., CLKREQ) asserted by both master and slave devices. In this embodiment, both the re-starting and the stopping of the peripheral bus clock signal is directly controlled by clock control circuit 120. It is noted that power management unit 111 may be configured to control clock generator 122 at other times during the operation of the computer system.

Upon reset, state machine 800 enters state 810 during which the clock request signal CLKREQ at line 127 is tri-stated and is passively pulled high by the clock control circuit 120 and during which the peripheral bus clock signal CLK is on. If the clock request signal at line 127 is detected high for a predetermined number of clocks (i.e., M clock cycles), state machine 800 enters state 820.

During state 820, line 127 continues to be tri-stated and pulled high by the clock control circuit 120 and the peripheral bus clock signal CLK is stopped. It is noted that clock generator 122 is directly controlled through power management unit 111 by clock control circuit 120 to stop the peripheral bus clock signal CLK. The state machine 800 remains in state 820 until the clock request signal CLKREQ at line 127 is pulled low, for example, by alternate bus master 108. When the clock request signal CLKREQ is asserted low, state machine 800 reverts back to state 810 and the peripheral bus clock signal CLK is re-started.

On the next clock cycle, state machine 800 will enter state 830 if the clock request signal CLKREQ continues to be asserted low. During state 830, the clock control circuit 120 maintains the low drive at line 127 so the master or slave device can release the drive. If a synchronous bus request signal (i.e., SREQx) is asserted, state machine 800 remains in state 830 until the bus request signal is deasserted high. If no bus request signal SREQx is asserted low and a predetermined number of clock cycles (i.e., N clocks) have transpired, state machine 800 enters state 840. During state 840, the clock request signal CLKREQ at line 127 is asserted high for one clock cycle by clock control circuit 120. State machine 800 then reverts back to state 810.

State machine 800 will remain in state 810 until the clock request signal at line 127 is again pulled low, thereby causing state machine 800 to enter state 830, or until M clock cycles have transpired, at which state machine 800 will enter state 820 and the peripheral bus clock signal will be stopped.

From the foregoing, it is evident that if slave device 600 requires that the peripheral clock signal CLK remain on, it will detect the low assertion of the clock request signal (referred to generally as an "indicator" signal) at line 127 by the clock control circuit 120 (i.e., during state 340, Figure 3 or state 840, Figure 8) and will drive the clock request signal low to keep the clock running for an additional timed period as determined by state 330 for the state machine 300 (of Figure 3) or by state 830 for the state machine 800 (of Figure 8).

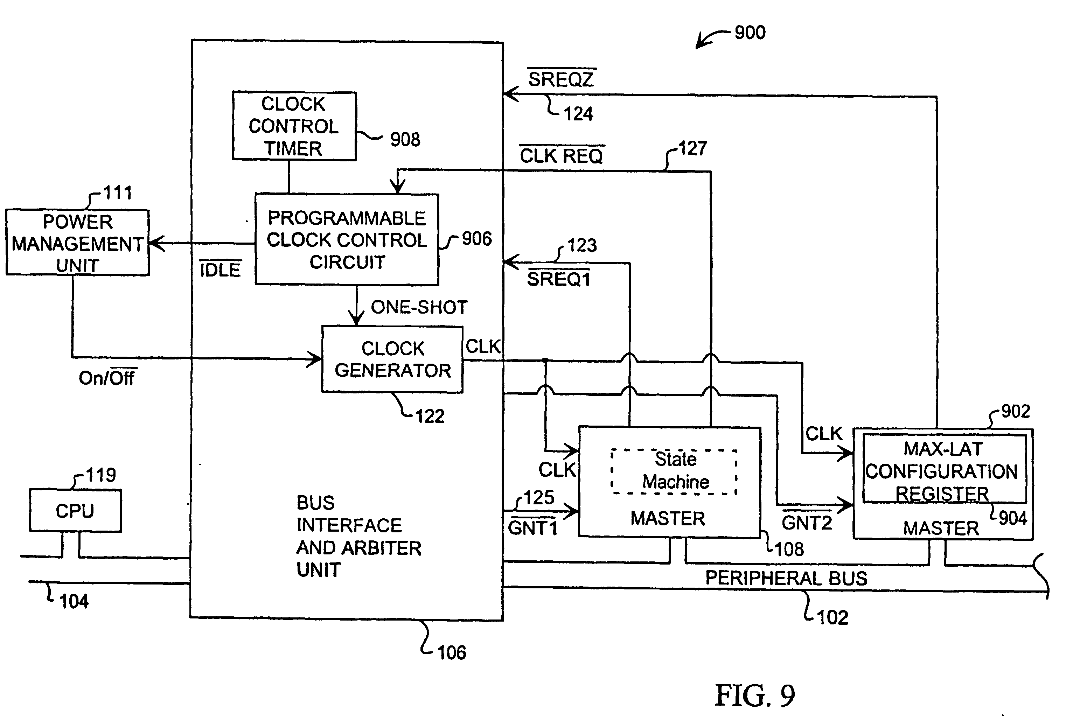

Referring next to Figure 9, a block diagram is shown of an alternative configuration of bus interface and arbiter unit 106. Circuit portions that correspond to those of Figure 4 are numbered identically for simplicity and clarity.

The system of Figure 9 operates in accordance with the foregoing description of Figure 4 for bus masters that are capable of generating a clock request signal CLKREQ (i.e., such as master 108). The system also accomodates conventional bus masters which are not designed to generate a clock request signal. Master 902 represents one such conventional bus master.

To achieve backwards compatibility with conventional alternate bus masters that are incapable of internally generating a clock request signal, a programmable clock control circuit 906 is provided that controls the periodic generation of a clock signal edge during power conserving modes to ensure that a bus master (i.e., master 902)can generate a synchronous bus request signal SREQx. As will be better understood from the following desription, the periodic rate at which a clock edge is generated during the power conserving mode is dependent upon a value read from internal configuration registers of the conventional bus masters.

Upon reset of computer system 900, microprocessor 119 begins execution of the BIOS boot code. During the booting procedure, a read operation is executed to read the contents of a configuration register 904 of master 902. The particular contents of this configuration register 904 will discussed in further detail below.

The BIOS code may also invoke another read request to a predetermined register location (within master 902) which contains a status bit indicative of whether the master 902 is capable of generating a clock request signal CLKREQ (It is noted that the clock request signal may be similarly referred to as a "clock run" signal CLKRUN). For the case of master 902, the status bit will indicate to the system BIOS that it is not capable of generating the clock request signal CLKREQ. The system BIOS may subsequently initiate additional read requests to read similar status and configuration registers within any other bus masters which may be connected to peripheral bus 102, such as master 108.

The contents of the configuration register 904 of master 902 are indicative of how often the master may require access to peripheral bus 102. In the preferred embodiment wherein peripheral bus 102 is a PCI standard configuration bus, configuration register 904 may embody the so-called MAXLAT (maximum latency) register or field. As will be readily appreciated by those of skill in the art, the MAXLAT field is used with other fields to determine the required bandwidth for a particular device and therefore its priority level for bus arbitration. The MAXLAT value is also used to specify desired settings for latency time values of the particular master. As indicated within the above-cited PCI Specification, the MAXLAT field is used for specifying how often a particular device needs to gain access to the PCI bus. The value specifies a period of time in units of 1/4 microseconds. A value of zero indicates the device has no major requirements for the settings of the latency timers (within the particular master).

Upon system reset, the BIOS boot code reads the designated MAXLAT configuration register within each alternate bus master connected to peripheral bus 102 and determines which bus masters can support generation of a clock request signal. Upon reading the MAXLAT field of each master, the system sets a clock control timer 908 in accordance with the MAXLAT value corresponding to the master which requires the most frequent access to the peripheral bus 102 (among those that cannot generate a clock request signal CLKREQ. If the master requiring the peripheral bus 102 most frequently specifies a maximum latency time of, for example, 2 microseconds, the system sets the clock control timer 908 such that it cycles (or triggers) every one microsecond (i.e., one-half of the specified maximum latency time). Thereafter, if a decision is made by the power management unit 111 to stop the peripheral bus clock, the clock control timer 908 begins cycling. Upon lapse of each microsecond, the clock control circuit 906 causes the clock generator 122 to provide at least one clock edge (i.e., a one-shot or a multi-shot). This ensures that any bus master such as master 902 coupled to peripheral bus 102 can generate a synchronous bus request signal (i.e., SREQ2) to obtain mastership of peripheral bus 102 even though that master is incapable of generating a clock request signal CLKREQ. Upon reset of a synchronous bus request signal SREQx, the programmable clock control circuit 906 causes the power management unit 111 to reenter the normal operating mode wherein the peripheral bus clock signal is driven at its maximum (or normal) frequency. The requesting master can thereby be serviced.

It is noted that although in the preferred embodiment the clock control timer 908 is set with a period of half the specified maximum latency time, the clock control timer 908 may be set with other values that are proportional (or dependent upon) the specified maximum latency time. For example, depending upon the system, the clock control timer 908 could be set with a period of 1/3 the maximum latency time. Optimal power optimization is believed to be achieved, however, by setting the period to 1/2 the maximum latency time, while ensuring that each master can obtain mastership of the peripheral bus without the loss of data.

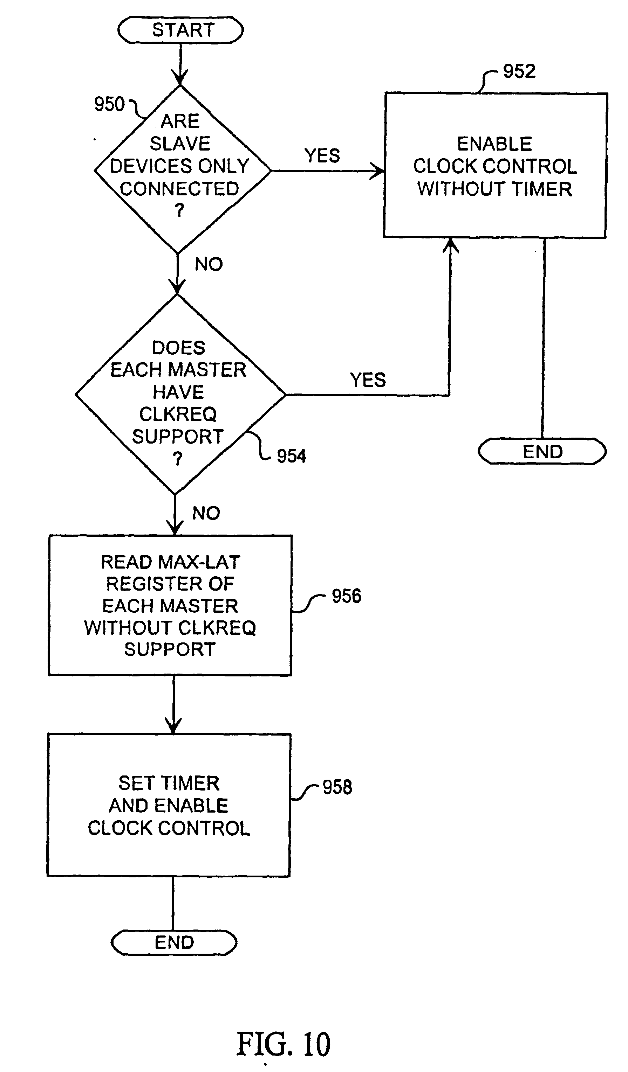

The system of Figure 9 thereby accomodates optimization of power management by stopping the clock signal for as long as possible between providing each periodic clock edge. Figure 10 is a flow diagram that illustrates the operation of the system of Figure 9. During step 950, the system BIOS determines whether only slave devices are couple to peripheral bus 102. If so, the programmable clock control circuit is set during step 952 to operate in accordance with the systems of Figures 4 and 6 without accomodating bus masters that cannot generate the clock request signal CLKREQ. A similar operation is set if each master connected to peripheral bus 102 is capable of generating the clock request signal CLKREQ, as determined by step 954. If one or more of the masters connected to peripheral bus 102 cannot support generation of the clock request signal, the MAXLAT field of the masters are read during step 956, and the clock control timer 908 is set during step 958 with a value which is half the period required by the master device requiring access most often.

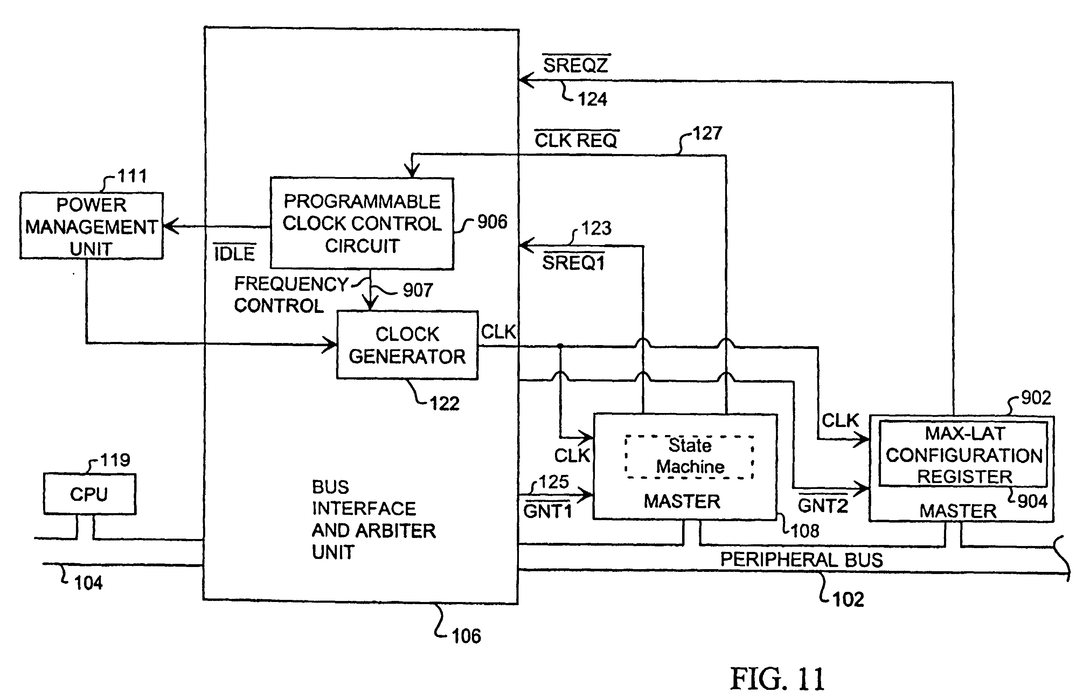

If the power management unit 111 (via clock generator 122) alternatively causes the peripheral bus clock signal to be slowed during the power conserving mode (rather than completely stopping the clock signal), the values read from the MAXLAT fields of each master may be used to determine the minimum frequency at which the clock signal may be slowed. Such an embodiment is illustrated in Figure 11. For the embodiment of Figure 11, the clock generator 122 is set by the programmable clock control circuit 906 to generate a peripheral bus clock signal at a period of not larger than half the maximum latency value specified within the MAXLAT field of the master requiring the peripheral bus most frequently. For example, if the master 902 indicates that it may require access to peripheral bus 102 every 2 microseconds in accordance with the value of register 904, and if it is the master which requires access to peripheral bus 102 the most often (of those masters that cannot support generation of the clock request signal), programmable clock control circuit 906 generates a frequency control signal at line 907 which causes clock generator 122 to drive the peripheral bus clock signal with a period of 1 microsecond (or of at most 1 microsecond) during the power conserving mode. This ensures that master 902 will be capable of generating a synchronous bus request signal at least as often as it may require. It is noted that once the bus request signal SREQx is generated by a particular master, power management unit 111 causes the clock generator 122 to drive the peripheral bus clock signal at full frequency.

As a result of a system according to the present invention, a peripheral bus clock signal can be stopped or slowed for power management while still accommodating alternate bus masters that must assert a synchronous bus request signal to obtain mastership of the peripheral bus.

The algorithmic state machines 300, 500, 700 and 800 described above may be reduced to sequential logic circuits by employing a variety of well known circuit reduction techniques. For example, computer-aided design tools may be employed to reduce the state machines 300, 500, 700 and 800 to sequential logic circuits. Exemplary computer-aided design tools include the VHSIC hardware description language and the VERILOG description language.

The power management unit 111 of Figures 2 and 4 may be configured to implement a variety of additional power management functions in addition to that described above. For example, power management unit 111 may be designed to implement functions similar to those described in U.S. Patent No. 5,167,024 issued November 24, 1992 to Smith et al. This patent is incorporated herein by reference in its entirety.

It is noted that slave device 600 could be embodied by a variety of specific peripheral devices. For example, slave device 600 could be a disk controller device or an audio controller device.

Furthermore, although the clock generator of 122 is shown within a bus interface and arbiter unit 106 in the embodiments described above, the clock generator 122 could be incorporated within a variety of alternative circuit blocks of computer system 100.

Numerous variations and modifications will become apparent to those skilled in the art once the above disclosure is fully appreciated. For example, it is understood that the peripheral bus clock signal could be reduced to any frequency level during the power conserving modes rather than completely stopping the clock signal (at 0 Hz). It is intended that the following claims be interpreted to embrace all such variations and modifications.

## Claims

1. A computer system comprising:
a microprocessor (119);
a local bus (104) coupled to said microprocessor;
a peripheral bus (102);
a bus interface and arbiter unit (106) coupled to said local bus and to said peripheral bus for orchestrating the transfer of data and address signals between said local bus and said peripheral bus and for arbitrating mastership of said peripheral bus;
**characterized in that** the system further comprises:
a clock generator circuit (122) for providing a peripheral bus clock signal on said peripheral bus, wherein said peripheral bus clock signal is capable of being selectively stopped and re-started;
an alternate bus master (108) coupled to said peripheral bus wherein said alternate bus master is capable of asserting a clock request signal when said peripheral bus clock signal is stopped; and
a clock control circuit (120) coupled to said alternate bus master for re-starting said peripheral bus clock signal in response to the assertion of said clock request signal.

2. The computer system as recited in Claim 1 further comprising a latching circuit (112) coupled to receive said clock request signal, wherein said latching circuit provides a synchronous bus request signal to said bus interface and arbiter unit in response to the peripheral bus clock signal.

3. The computer system as recited in Claim 1 wherein said alternate bus master includes a state machine (500) that asserts said clock request signal when said peripheral bus clock signal is stopped and that asserts a synchronous bus request after said peripheral bus clock signal is re-started, wherein said synchronous bus request signal is provided to said bus interface and arbiter unit for requesting mastership of said peripheral bus.

4. The computer system as recited in Claim 1 wherein said peripheral bus is a PCI bus.

5. The computer system as recited in Claim 3 further comprising a power management unit (111) coupled to said clock control circuit and to said clock generator circuit, wherein said power management unit provides a control signal to said clock generator for selectively stopping and re-starting said peripheral bus clock signal, and wherein said clock control circuit provides a command signal to said power management unit in response to said clock request signal.

6. The computer system as recited in Claim 5 wherein said power management unit stops said peripheral bus clock signal upon the occurrence of a predetermined condition after said microprocessor has attained mastership of said peripheral bus.

7. The computer system as recited in Claim 3 wherein said bus interface and arbiter unit asserts a bus grant signal in response to said synchronous bus request signal.

8. The computer system as recited in Claim 3 wherein said peripheral bus includes a control line (128) for coupling said clock request signal from said alternate bus master to said clock control circuit.

9. The computer system as recited in Claim 1 further comprising:
a power management unit (111) coupled to said clock generator circuit for stopping said peripheral bus clock signal upon the occurrence of a predetermined condition;
wherein the clock control circuit is coupled to receive an asynchronous clock request signal generated by the alternate bus master when said peripheral bus clock signal is stopped, wherein said clock control circuit generates a command signal in response to said asynchronous clock request signal that causes said power management unit to re-start said peripheral bus clock signal; and
wherein the bus interface and arbiter unit is responsive to a bus request signal generated by said alternate bus master, wherein said bus request signal is synchronous to said peripheral bus clock signal, and wherein said bus interface and arbiter unit generates a grant signal in response to said bus request signal for indicating mastership of said peripheral bus to said alternate bus.

10. The computer system as recited in Claim 9 wherein said alternate bus master includes a state machine that asserts said asynchronous clock signal when said peripheral bus clock signal is stopped and that asserts a synchronous request signal after said peripheral bus clock signal is re-started.

11. The computer system as recited in Claim 9 wherein said clock control circuit includes a state machine (300) that asserts said command signal in response to said asynchronous clock signal.

12. The computer system as recited in Claim 9 wherein said peripheral bus is a PCI standard bus.

13. The computer system as recited in Claim 9 further comprising a control line (128) incorporated on said peripheral bus for coupling said asynchronous clock request signal from said alternate bus master to said clock control circuit.

14. A method for re-starting a peripheral bus clock signal and requesting mastership of a peripheral bus (102) comprising the steps of
stopping said peripheral bus clock signal upon the occurrence of a predetermined condition;
generating an asynchronous clock request signal within an alternate bus master (108);
re-starting said peripheral bus clock signal in response to said asynchronous clock request signal; and
generating a synchronous bus request signal within said alternate bus master after said peripheral bus clock signal has been re-started, wherein said synchronous bus request signal is synchronous to said peripheral bus clock signal.

15. The method for re-starting a peripheral bus clock signal and requesting mastership of a peripheral bus as recited in Claim 14 comprising the further step of generating a bus grant signal in response to said synchronous bus request signal.

16. The method for re-starting a peripheral bus clock signal and requesting mastership of a peripheral bus as recited in Claim 14 wherein said step of restarting said peripheral bus clock signal includes the step of coupling the asynchronous clock request signal from said alternate bus master to a clock control circuit through a control line (128) incorporated on said peripheral bus.

17. The method for re-starting a peripheral bus clock signal and requesting mastership of a peripheral bus as recited in Claim 15 wherein said step of generating a bus grant signal is performed by a bus arbiter unit (106).

## Patentansprüche

1. Computersystem mit:
einem Mikroprozessor (119);
einem mit dem Mikroprozessor verbundenen Lokalbus (104);
einem Peripheriebus (102);
einer Bus-Interface- und Arbiter-Einheit (106), die mit dem Lokalbus und dem Peripheriebus verbunden ist, um die Übertragung von Daten- und Adress-Signalen zwischen dem Lokalbus und dem Peripheriebus zu organisieren und die Verfügung über den Peripheriebus zu arbitrieren,
**dadurch gekennzeichnet, dass** das System ferner aufweist:
eine Taktgeneratorschaltung (122) zum Erzeugen eines Peripheriebus-Taktsignals auf dem Peripheriebus, wobei das Peripheriebus-Taktsignal selektiv gestoppt und neugestartet werden kann;
einen mit dem Peripheriebus verbundenen Alternativ-Bus-Master (108), der ein Taktanforderungssignal aktivieren kann, wenn das Peripheriebus-Taktsignal gestoppt wird; und
eine mit dem Alternativ-Bus-Master verbundene Taktsteuerschaltung (120) zum Neustarten des Peripheriebus-Taktsignals auf die Aktivierung des Taktanforderungssignals hin.

2. Computersystem nach Anspruch 1, ferner mit einer Latch-Schaltung (112) zum Empfang des Taktanforderungssignals, wobei die Latch-Schaltung auf das Peripheriebus-Taktsignal hin ein synchrones Busanforderungssignal an die Bus-Interface- und Arbiter-Einheit ausgibt.

3. Computersystem nach Anspruch 1, bei dem der Alternativ-Bus-Master eine Zustandsmaschine (500) aufweist, die das Taktanforderungssignal aktiviert, wenn das Peripheriebus-Taktsignal gestoppt ist, und die ein synchrones Busanforderungssignal aktiviert, nachdem das Peripheriebus-Taktsignal neugestartet ist, wobei das synchrone Busanforderungssignal an die Bus-Interface- und Arbiter-Einheit ausgegeben wird, um die Verfügung über den Peripheriebus anzufordern.

4. Computersystem nach Anspruch 1, bei dem der Peripheriebus ein PCI-Bus ist.

5. Computersystem nach Anspruch 3, ferner mit einer Energiemanagementeinheit (111), die mit der Taktsteuerschaltung und der Taktgeneratorschaltung verbunden ist, wobei die Energiemanagementeinheit an den Taktgenerator ein Steuersignal zum selektiven Stoppen und Neustarten des Peripheriebus-Taktsignals ausgibt, und wobei die Taktsteuerschaltung auf das Taktanforderungssignal hin ein Befehlssignal an die Energiemanagementeinheit ausgibt.

6. Computersystem nach Anspruch 5, bei dem die Energiemanagementeinheit beim Auftreten eines vorbestimmten Zustands, nachdem der Mikroprozessor die Verfügung über den Peripheriebus erlangt hat, das Peripheriebus-Taktsignal stoppt.

7. Computersystem nach Anspruch 3, bei dem die Bus-Interface- und Arbiter-Einheit auf das synchrone Busanforderungssignal hin ein Bus-Zuweisungssignal aktiviert.

8. Computersystem nach Anspruch 3, bei dem der Peripheriebus eine Steuerleitung (128) zum Anlegen des von dem Alternativ-Bus-Master zugeführten Taktanforderungssignals an die Taktsteuerschaltung aufweist.

9. Computersystem nach Anspruch 1, ferner mit:
einer mit der Taktgeneratorschaltung verbundenen Energiemanagementeinheit (111) zum Stoppen des Peripheriebus-Taktsignals beim Auftreten eines vorbestimmten Zustands;
wobei die Taktsteuerschaltung ausgelegt ist zum Empfangen eines asynchronen Taktanforderungssignals, das von dem Alternativ-Bus-Master erzeugt wird, wenn das Peripheriebus-Taktsignal gestoppt ist, wobei die Taktsteuerschaltung auf das asynchrone Taktanforderungssignal hin ein Befehlssignal erzeugt, das die Energiemanagementeinheit zum Neustarten des Peripheriebus-Taktsignals veranlasst; und
wobei die Bus-Interface- und Arbiter-Einheit auf ein vom Alternativ-Bus-Master erzeugtes Busanforderungssignal reagiert, wobei das Busanforderungssignal synchron mit dem Peripheriebus-Taksignal ist, und wobei die Bus-Interface- und Arbiter-Einheit auf das Busanforderungssignal hin ein Zuweisungssignal erzeugt, um dem Alternativ-Bus die Verfügung über den Peripheriebus anzuzeigen.

10. Computersystem nach Anspruch 9, bei dem der Alternativ-Bus-Master eine Zustandsmaschine aufweist, die das asynchrone Taktsignal aktiviert, wenn das Peripheriebus-Taktsignal gestoppt ist, und die ein synchrones Anforderungssignal aktiviert, nachdem das Peripheriebus-Taktsignal neugestartet worden ist.

11. Computersystem nach Anspruch 9, bei dem die Taktsteuerschaltung eine Zustandsmaschine (300) aufweist, die auf das asynchrone Taktsignal hin das Befehlssignal aktiviert.

12. Computersystem nach Anspruch 9, bei dem der Peripheriebus ein PCI-Standard-Bus ist.

13. Computersystem nach Anspruch 9, ferner mit einer im Peripheriebus enthaltenen Steuerleitung (128) zum Anlegen des von dem Alternativ-Bus-Master zugeführten asynchronen Taktanforderungssignals an die Taktsteuerschaltung.

14. Verfahren zum Neustarten eines Peripheriebus-Taktsignals und zum Beanspruchen der Verfügung über einen Peripheriebus (102), mit den folgenden Schritten:
Stoppen des Peripheriebus-Taktsignals beim Auftreten eines vorbestimmtem Zustands;
Erzeugen eines asynchronen Taktanforderungssignals in einem Alternativ-Bus-Master (108);
Neustarten des Peripheriebus-Taktsignals auf das asynchrone Taktanforderungssignal hin; und
Erzeugen eines synchronen Busanforderungssignals in dem Alternativ-Bus-Master, nachdem das Peripheriebus-Taktsignal neugestartet worden ist, wobei das synchrone Busanforderungssignal synchron mit dem Peripheriebus-Taktsignal ist.

15. Verfahren zum Neustarten eines Peripheriebus-Taktsignals und zum Beanspruchen der Verfügung über einen Peripheriebus nach Anspruch 14, mit dem weiteren Schritt des Erzeugens eines Bus-Zuweisungssignals auf das synchrone Busanforderungssignal hin.

16. Verfahren zum Neustarten eines Peripheriebus-Taktsignals und zum Beanspruchen der Belegung eines Peripheriebusses nach Anspruch 14, bei dem der Schritt des Neustartens des Peripheriebus-Taktsignals einen Schritt enthält, in dem das asynchrone Taktanforderungssignal aus dem Alternativ-Bus-Master über eine im Peripheriebus enthaltene Steuerleitung (128) mit einer Taktsteuerleitung verbunden wird.

17. Verfahren zum Neustarten eines Peripheriebus-Taktsignals und zum Beanspruchen der Belegung eines Peripheriebusses nach Anspruch 15, bei dem der Schritt des Erzeugens eines Bus-Zuweisungssignals durch eine Bus-Arbiter-Einheit (106) durchgeführt wird.

## Revendications

1. Système d'ordinateur comprenant :
un microprocesseur (119) ;
un bus local (104) couplé audit microprocesseur ;
un bus périphérique (102) ;
une unité d'arbitrage et d'interface de bus (106) couplée audit bus local et audit bus périphérique pour orchestrer le transfert de signaux d'adresse et de données entre ledit bus local et ledit bus périphérique et pour arbitrer une maîtrise dudit bus périphérique ;
**caractérisé en ce que** le système comprend, de plus :
un circuit générateur d'horloge (122) pour fournir un signal d'horloge de bus périphérique sur ledit bus périphérique, dans lequel ledit signal d'horloge de bus périphérique est capable d'être arrêté et redémarré sélectivement ;
un pilote de bus alternatif (108) couplé audit bus périphérique dans lequel ledit pilote de bus alternatif est capable d'imposer un signal de requête d'horloge lorsque ledit signal d'horloge de bus périphérique est arrêté ; et
un circuit de commande d'horloge (120) couplé audit pilote de bus alternatif pour redémarrer ledit signal d'horloge de bus périphérique en réponse à l'imposition dudit signal de requête d'horloge.

2. Système d'ordinateur selon la revendication 1 comprenant, de plus, un circuit de verrouillage (112) couplé pour recevoir ledit signal de requête d'horloge, dans lequel ledit circuit de verrouillage fournit un signal synchrone de requête de bus à ladite unité d'arbitrage et interface de bus en réponse au signal d'horloge de bus périphérique.

3. Système d'ordinateur selon la revendication 1 dans lequel ledit pilote de bus alternatif comprend une machine d'état (500) qui applique ledit signal de requête d'horloge lorsque ledit signal d'horloge de bus périphérique est arrêté et qui applique une requête de bus synchrone après que ledit signal d'horloge de bus périphérique est réamorcé, dans lequel ledit signal synchrone de requête de bus est fourni à ladite unité d'arbitrage et d'interface de bus pour requérir une maîtrise dudit bus périphérique.

4. Système d'ordinateur selon la revendication 1 dans lequel ledit bus périphérique est un bus PCI.

5. Système d'ordinateur selon la revendication 3 comprenant, de plus, une unité de gestion de puissance (111) couplée audit circuit de commande d'horloge et audit circuit générateur d'horloge, dans lequel ladite unité de gestion de puissance fournit un signal de commande audit générateur d'horloge pour arrêter et redémarrer sélectivement ledit signal d'horloge de bus périphérique, et dans lequel ledit circuit de commande d'horloge fournit un signal de commande à ladite unité de gestion de puissance en réponse audit signal de requête d'horloge.

6. Système d'ordinateur selon la revendication 5 dans lequel ladite unité de gestion de puissance arrête ledit signal d'horloge de bus périphérique lors de l'occurrence d'un état prédéterminé après que ledit microprocesseur a obtenu la maîtrise dudit bus périphérique.

7. Système d'ordinateur selon la revendication 3 dans lequel ladite unité d'arbitrage et d'interface de bus applique un signal d'autorisation de bus en réponse audit signal synchrone de requête de bus.

8. Système d'ordinateur selon la revendication 3 dans lequel ledit bus périphérique comprend une ligne de commande (128) pour coupler ledit signal de requête d'horloge à partir dudit pilote de bus alternatif audit circuit de commande d'horloge.

9. Système d'ordinateur selon la revendication 1 comprenant, de plus :
une unité de gestion de puissance (111) couplée audit circuit générateur d'horloge pour arrêter ledit signal de bus périphérique lors de l'occurrence d'un état prédéterminé ;
dans lequel le circuit de commande d'horloge est couplé pour recevoir un signal asynchrone de requête d'horloge généré par le pilote de bus alternatif lorsque ledit signal d'horloge de bus périphérique est arrêté,
dans lequel ledit circuit de commande d'horloge génère un signal de commande en réponse audit signal asynchrone de requête d'horloge qui entraîne ladite unité de gestion de puissance à redémarrer ledit signal d'horloge de bus périphérique ; et
dans lequel l'unité d'arbitrage et d'interface de bus répond à un signal de requête de bus généré par ledit pilote de bus alternatif, dans lequel ledit signal de requête de bus est synchrone audit signal d'horloge de bus périphérique, et dans lequel ladite unité d'arbitrage et d'interface de bus génère un signal d'autorisation en réponse audit signal de requête de bus pour indiquer une maîtrise dudit bus périphérique par rapport audit bus alternatif.

10. Système d'ordinateur selon la revendication 9 dans lequel ledit pilote de bus alternatif comprend une machine d'état qui impose ledit signal asynchrone d'horloge lorsque ledit signal d'horloge de bus périphérique est arrêté et qui impose un signal synchrone de requête après que ledit signal d'horloge de bus périphérique est redémarré.

11. Système d'ordinateur selon la revendication 9 dans lequel ledit circuit de commande d'horloge comprend une machine d'état (300) qui impose ledit signal de commande en réponse audit signal asynchrone d'horloge.

12. Système d'ordinateur selon la revendication 9 dans lequel ledit bus périphérique est un bus PCI standard.

13. Système d'ordinateur selon la revendication 9 comprenant, de plus, une ligne de commande (128) incorporée sur ledit bus périphérique pour,coupler ledit signal asynchrone de requête d'horloge venant dudit pilote de bus alternatif audit circuit de commande d'horloge.

14. Procédé pour redémarrer un signal d'horloge de bus périphérique et requérir une maîtrise d'un bus périphérique (102) comprenant les étapes consistant à :
arrêter ledit signal d'horloge de bus périphérique lors de l'occurrence d'un état prédéterminé ;
générer un signal asynchrone de requête d'horloge à l'intérieur d'un pilote de bus alternatif (108) ;
redémarrer ledit signal d'horloge de bus périphérique en réponse audit signal asynchrone de requête d'horloge ; et
générer un signal synchrone de requête de bus à l'intérieur dudit pilote de bus alternatif après que ledit signal d'horloge de bus périphérique a été redémarré, dans lequel ledit signal synchrone de requête de bus est synchrone par rapport audit signal d'horloge de bus périphérique.

15. Procédé pour redémarrer un signal d'horloge de bus périphérique et requérir la maîtrise sur un bus périphérique selon la revendication 14 comprenant, de plus, l'étape consistant à générer un signal d'autorisation de bus en réponse audit signal synchrone de requête de bus.

16. Procédé pour redémarrer un signal d'horloge de bus périphérique et requérir une maîtrise d'un bus périphérique selon la revendication 14 dans lequel ladite étape consistant à redémarrer ledit signal d'horloge de bus périphérique comporte l'étape consistant à coupler le signal asynchrone de requête d'horloge issu dudit pilote de bus alternatif à un circuit de commande d'horloge par une ligne de commande (128) incorporée sur ledit bus périphérique.

17. Procédé pour redémarrer un signal d'horloge de bus périphérique et requérir une maîtrise d'un bus périphérique selon la revendication 15 dans lequel ladite étape consistant à générer un signal d'autorisation de bus est réalisé par une unité d'arbitrage de bus (106).
